(19) Europäisches Patentamt

European Patent Office

Office européen des brevets

(11) **EP 1 620 310 B1**

(12) **EUROPÄISCHE PATENTSCHRIFT**

(45) Veröffentlichungstag und Bekanntmachung des Hinweises auf die Patenterteilung:
**28.06.2006 Patentblatt 2006/26**

(21) Anmeldenummer: **04741518.7**

(22) Anmeldetag: **05.05.2004**

(51) Int Cl.:
**B64C 1/00** (2006.01)     **B64C 3/10** (2006.01)
**B64C 39/10** (2006.01)

(86) Internationale Anmeldenummer:
**PCT/EP2004/050719**

(87) Internationale Veröffentlichungsnummer:
**WO 2004/098992 (18.11.2004 Gazette 2004/47)**

(54) **FLUGGERÄT MIT AUFTRIEB ERZEUGENDEM RUMPF**

AIRCRAFT WITH A LIFT-GENERATING FUSELAGE

AERODYNE AVEC UN FUSELAGE GENERANT UNE PORTANCE

(84) Benannte Vertragsstaaten:
**AT BE BG CH CY CZ DE DK EE ES FI FR GB GR HU IE IT LI LU MC NL PL PT RO SE SI SK TR**

(30) Priorität: **05.05.2003 CH 7792003**

(43) Veröffentlichungstag der Anmeldung:
**01.02.2006 Patentblatt 2006/05**

(73) Patentinhaber: **Team Smartfish GmbH**
**6371 Stans (CH)**

(72) Erfinder: **SCHAFROTH, Konrad**
**CH-3011 Bern (CH)**

(74) Vertreter: **P&TS**
**Patents & Technology Surveys SA**
**Rue des Terreaux 7,**
**Postfach 2848**
**2001 Neuchâtel (CH)**

(56) Entgegenhaltungen:
**WO-A-02/30743          WO-A-03/039951**
**GB-A- 1 220 055          US-A- 5 769 358**
**US-A- 6 129 308**

## Beschreibung

Die vorliegende Erfindung betrifft ein neues Fluggerät, insbesondere ein Fluggerät, das durch eine neue Form gekennzeichnet ist.

Herkömmliche Fluggeräte weisen einen zylinderförmigen Rumpf für die Passagiere oder die Fracht auf, einen Tragflügel für den Auftrieb und ein Leitwerk für die Aufrechterhaltung der Flugstabilität. Die Flügel haben eine grosse Streckung, was aber den Nachteil hat, dass durch die grossen Biegemomente grosse Kräfte entstehen und der Flügel dementsprechend massiv gebaut werden muss. Das nutzbare Volumen bei herkömmlichen Fluggeräten ist bezogen auf die äusseren Abmessungen und die benetzte Oberfläche klein. Der Auftrieb, der durch grössere Flügel erzeugt wird, wird durch das zusätzliche Gewicht teilweise wieder aufgehoben.

Es wurden auch sogenannte Nurflügler (Flying Wings) beschrieben, bei welchen der Rumpf so gestaltet ist, dass auch dieser Auftrieb erzeugt. Auf das Leitwerk wird verzichtet. Man kann sogar soweit gehen und den Rumpf ganz in den Flügel integrieren, um bessere Flugleistungen zu erzielen. Während beim Schwanzfluggerät die Flugleistung vom Flügel und die Nicksteuerung sowie die Längsstabilität vom Leitwerk bewerkstelligt wird, muss ein schwanzloses Fluggerät alle drei Aufgaben mit dem Flügel erzielen. Ein wesentlicher Teil des Flügels muss diese Aufgaben übernehmen und kann nicht für die Auftriebserzeugung ausgelegt werden. Deshalb wird eine grössere Flügelfläche benötigt als bei einem Schwanzfluggerät.

Da Nurflügler nur einen kurzen Leitwerkshebelarm haben, sind sie sehr empfindlich auf die Schwerpunktlage. Wegen der Kopplungen der Parameter sind sie schwierig auszulegen.

Bei hohen Geschwindigkeiten kann der Flügel eines Fluggeräts kleiner gehalten werden. Es ist sogar möglich den Rumpf des Fluggerätes so auszugestalten, dass der Rumpf bei hohen Fluggeschwindigkeiten den benötigten Auftrieb selber erzeugen kann. In diesem Fall werden Flügel gar nicht mehr benötigt. Solche Fluggeräte werden Lifting Body genannt. Lifting Bodys haben wegen der geringen Streckung der Auftriebsfläche den Nachteil, dass der induzierte Widerstand bei grossen Anstellwinkeln sehr hoch werden kann. Ein weiterer Nachteil einer solchen Konstruktion ist, dass zum Starten und Landen eine hohe Geschwindigkeit benötigt wird.

Das Dokument US-A-5 769 358 zeigt ein Fluggerät mit einem Auftrieb erzeugenden Rumpf, dessen Grundriß sich im ersten Fünftel progressiv verjüngt, sowie mit zwei Flügel, wobei die Fläche der Projektion beider Flügel in einer horizontalen Ebene weniger als vierzig Prozent der gesamten Auftriebsfläche darstellt, und mit einem Höhenleitwerk am letzten Fünftel des Rumpfes.

Das Dokument GB-A-1 220 055 zeigt in den Figuren 6 und 7 ein Nurflügler ohne Höhenleitwerk, wobei zum Zwecke der Gewährleistung der Stabilität um die Nickachse das longitudinale mittlere Profil des Fluggeräts entweder keine oder negative Wölbung aufweist, das longitudinale Profil der Flügel positiv gewölbt ist, das Profil des Rumpfes einen positiven Momentbeiwert aufweist, und das Profil der Flügel einen negativen Momentbeiwert aufweist.

Ausgehend vom Stand der Technik ist nun das Ziel der Erfindung, ein Fluggerät vorzuschlagen, das eine kleine Streckung hat, zugleich aber gute Gleiteigenschaften aufweist.

Ein weiteres Ziel der vorliegenden Erfindung ist die Erzielung einer guten Steuerbarkeit.

Ein weiteres Ziel der vorliegenden Erfindung ist die Erzielung eines möglichst guten Wirkungsgrades für die Triebwerksinstallation.

Ein weiteres Ziel der Erfindung ist es, einen möglichst guten Wirkungsgrad des Einlaufs und des Triebwerks für die wichtigsten Flugphasen (Start, Steigflug, Reiseflug, usw.) zu erwirken.

Ein weiteres Ziel der Erfindung ist es, bei Start und Landung das Einsaugen von Fremdobjekten in das Triebwerk weitgehend zu verhindern.

Ein weiteres Ziel der Erfindung ist es, ein Fluggerät zu bauen, in welchem der Zusatzwiderstand, der durch die Triebwerksanlage verursacht wird, reduziert wird.

Ein weiteres Ziel der Erfindung ist es, die Aerodynamik und damit die Form des Fluggeräts so zu gestalten, dass viel Platz für den Einbau des Antriebs und aller Systeme vorhanden ist, und dass der Ort dieser Einbauten dazu verwendet werden kann, den Schwerpunkt anzupassen.

Ein weiteres Ziel der vorliegenden Erfindung ist, die Betriebskosten im Vergleich zu herkömmlichen Fluggeräten zu reduzieren.

Ein weiteres Ziel der vorliegenden Erfindung ist, die Überlebenschancen der Passagiere im Falle eines Unfalls zu erhöhen.

Ein weiteres Ziel ist, die Lärmemission von solchen Fluggeräten zu verkleinern.

Ein weiteres Ziel der vorliegenden Erfindung ist die Erhöhung der wirtschaftlichen Reisegeschwindigkeit.

Ein weiteres Ziel der vorliegenden Erfindung ist, die Reduzierung der Minimalgeschwindigkeit und somit eine Herabsetzung der Start und Landegeschwindigkeit eines solchen Fluggeräts.

Ein weiteres Ziel der vorliegenden Erfindung ist die Erzielung möglichst guter Flugleistungen, insbesondere im Langsamflug.

Ein weiteres Ziel der vorliegenden Erfindung ist die Reduzierung der Trimmkräfte über den ganzen Geschwindigkeitsbereich.

Diese Ziele werden mit einem Fluggerät erreicht, das die Merkmale der unabhängigen Ansprüche aufweist. Bevorzugte Ausführungsbeispiele werden in den abhängigen Ansprüchen angegeben.

Insbesondere werden diese Ziele durch ein Fluggerät erreicht, mit einem Auftrieb erzeugenden Rumpf, dessen Grundriss sich im ersten Fünftel und im letzten Fünftel progressiv verjüngt, zwei Flügeln, wobei die Fläche der Projektion beider Flügel in einer horizontalen Ebene weniger als vierzig Prozent der gesamten Auftriebsfläche darstellt, einem Höhenleitwerk am letzten Fünftel des Rumpfes,
wobei das longitudinale mittlere Profil des Fluggeräts eine negative Wölbung aufweist, und wobei das longitudinale Profil der Flügel positiv gewölbt ist.

Durch diese Anordnung wird der Rumpf (oder die Skelettlinie des Rumpfes) nach unten leicht gewölbt, während die Flügel (oder die Skelettlinie der Flügel) mindestens teilweise nach oben gewölbt sind.

Dies hat unter anderem den Vorteil, dass die Stabilität erhöht wird, unter anderem weil die Wirbel (der Vortex) nicht asymmetrisch über die Flügel aufplatzen.

Die aerodynamisch bestmögliche Verteilung der Querschnitte des Fluggeräts entlang der Längsachse des Fluggerätes könnte erreicht werden, wenn die maximale Spannweite der Flügel sich zwischen 50 bis 60% der Rumpflänge befinden würde. Dadurch aber kommen der Druckpunkt und Neutralpunkt und somit auch der Schwerpunkt relativ weit vorne zu liegen, bei ca. 39% der Rumpflänge. Dies kann Probleme mit der Ausbalancierung des Fluggerätes ergeben, da das Triebwerk hinter dem Schwerpunkt angeordnet ist. Ein weiteres Problem ergibt sich mit der Höhe des Hauptfahrwerks, da dieses ja relativ nahe hinter dem Schwerpunkt angeordnet ist.

Dieses Problem wird nun erfindungsgemäss so gelöst, indem die Form des Fluggeräts so gestaltet wird, dass der Neutralpunkt / Druckpunkt und somit auch Schwerpunkt weiter hinten zu liegen kommt. Dies erhöht die Stabilität des Flugzeuges.

Erfindungsgemäss kommt somit die maximale Spannweite der Flügel zwischen 60% und 80% der Länge des Rumpfes zu liegen, vorzugsweise aber zwischen 66% und 80%. Dadurch verschieben sich der Druckpunkt und somit auch der Schwerpunkt nach hinten. Somit lässt sich das Fluggerät leichter ausbalancieren, da nun das Triebwerk näher dem Schwerpunkt zu liegen kommt. Dadurch entsteht mehr Spielraum für die Ausbalancierung des Fluggeräts beim Einbau der Systeme und des Triebwerks. Ein weiterer Vorteil des relativ weit hinten liegenden Schwerpunkts ist die Möglichkeit, die sich durch ein kurzes Hauptfahrwerk realisieren lässt, was wiederum Vorteile in Gewicht und Luftwiderstand ergibt.

Die Stabilität wird erfindungsgemäss auch durch ein Fluggerät erreicht, mit einem Auftrieb erzeugenden Rumpf, dessen grösste Spannweite im dritten und vierten Fünftel der Gesamtlänge liegt und dessen Grundriss sich im ersten Fünftel und im letzten Fünftel progressiv verjüngt und Flügel aufweist. Die Fläche der Projektion beider Flügel in einer horizontalen Ebene stellt weniger als 40, vorzugsweise weniger als 30, in einer noch bevorzugteren Variante weniger als 20 Prozent der Projektion in einer horizontalen Ebene der gesamten Auftriebsfläche dar. Sie befinden sich am dritten und vierten Fünftel der Gesamtlänge des benannten Rumpfes. Das Fluggerät hat ein Höhenleitwerk am letzten Fünftel des Rumpfes, dessen Spannweite vorzugsweise mindestens 90% der Spannweite im dritten oder vierten Fünftel des Rumpfes beträgt.

Das erfindungsgemässe Fluggerät unterscheidet sich von bekannten Fluggeräten auch durch eine neue Verteilung der Auftriebsfläche entlang der Längsachse von herkömmlichen Fluggeräten.

Das Verhältnis zwischen der Auftriebsfläche des dritten und vierten Fünftels des Fluggerätes einschliesslich den Flügeln, und der Auftriebsfläche des ersten und zweiten Fünftels des Fluggerätes liegt vorzugsweise zwischen 1.5 und 3.0, während das Verhältnis zwischen der Auftriebsfläche des benannten dritten und vierten Fünftels des Fluggerätes, einschliesslich den Flügeln, und der Auftriebsfläche des letzten Fünftels des Rumpfes zwischen 5.0 und 15 liegt. Die Auftriebsfläche des letzten Fünftels des Rumpfes ist aber in etwa gleich gross oder sogar etwas kleiner als die Auftriebsfläche des ersten Fünftels des Fluggerätes.

Diese Konstruktion hat den Vorteil, dass sie sehr kompakt sein kann. Durch die geringe Spannweite, die durch einen Auftrieb erzeugenden Rumpf und kleine Flügel ermöglicht wird, sind die auf die Struktur wirkenden Momente kleiner als bei herkömmlichen Fluggeräten, so dass die Tragstruktur leichter und trotzdem stabil gebaut werden kann.

Diese Konstruktion hat auch den Vorteil, dass die fast optimale Verteilung der Querschnitte des Fluggerätes entlang der Längsachse des Fluggerätes eine höhere wirtschaftliche Reisegeschwindigkeit im transsonischen Bereich ermöglicht.

In einer bevorzugten Variante wird ausserdem die Aerodynamik und damit die Form des Fluggeräts so gestaltet, dass das Hauptfahrwerk möglichst kurz und leicht gestaltet werden kann.

Die Flügel sind klein und horizontal, oder fast horizontal. Die Fläche der Projektion beider Flügel in einer vertikalen Ebene stellt weniger als 60 Prozent der Fläche der Projektion beider Flügel in einer horizontalen Ebene dar. Da ein Leitwerk vorhanden ist, lässt sich ein solches Fluggerät leicht steuern. Anstatt mit Querrudern an den Flügeln erfolgt die Steuerung um die Längsachse nur durch gegenseitigen Ausschlag der Höhenruder.

Das Cockpit ist vorzugsweise in einer wulstartigen Verdickung auf der Rumpfoberseite angebracht, wobei die benannte Verdickung gleich lang ist wie der benannte Rumpf. Dies hat zur Folge, dass der interferenzwiderstand zwischen Cockpit und Rumpf minimiert wird.

Nachfolgend werden anhand der Zeichnungen bevorzugte Ausführungsbeispiele des Erfindungsgegenstandes beschrieben.

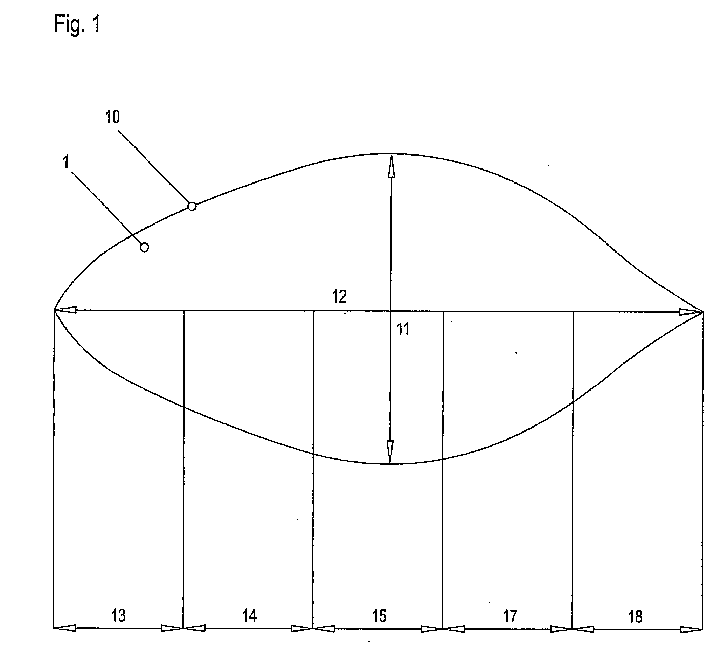

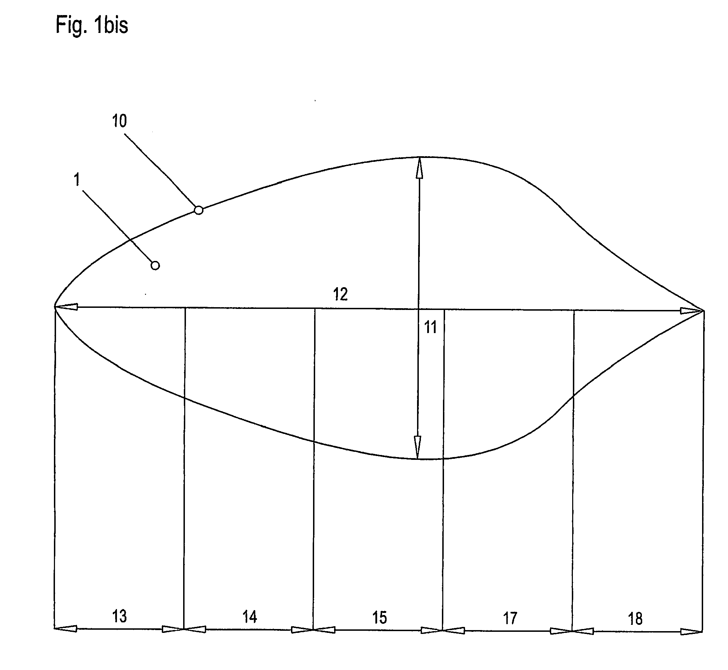

Die Figur 1 zeigt den Grundriss des Rumpfes.

Die Figur 1bis zeigt den Grundriss des Rumpfes in einer alternativen Ausführungsform.

Die Figur 2 zeigt den Rumpf mit den Flügeln.

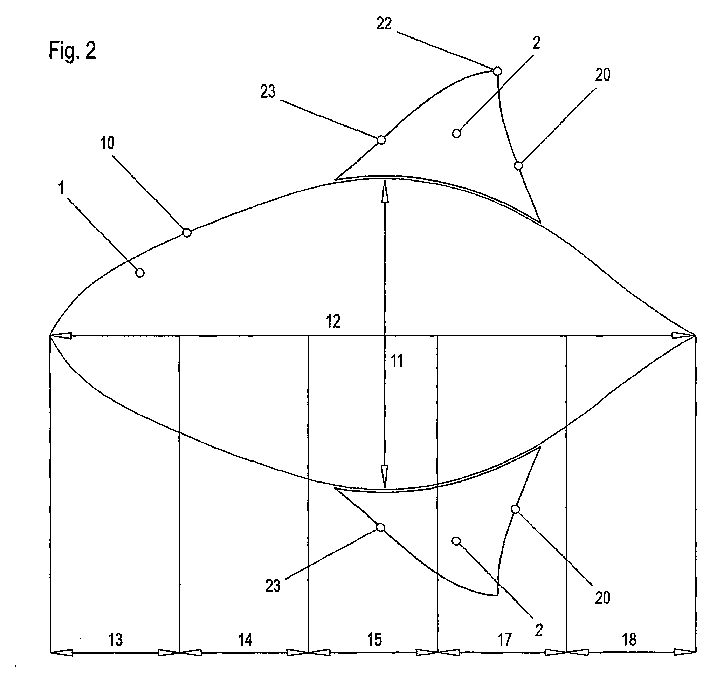

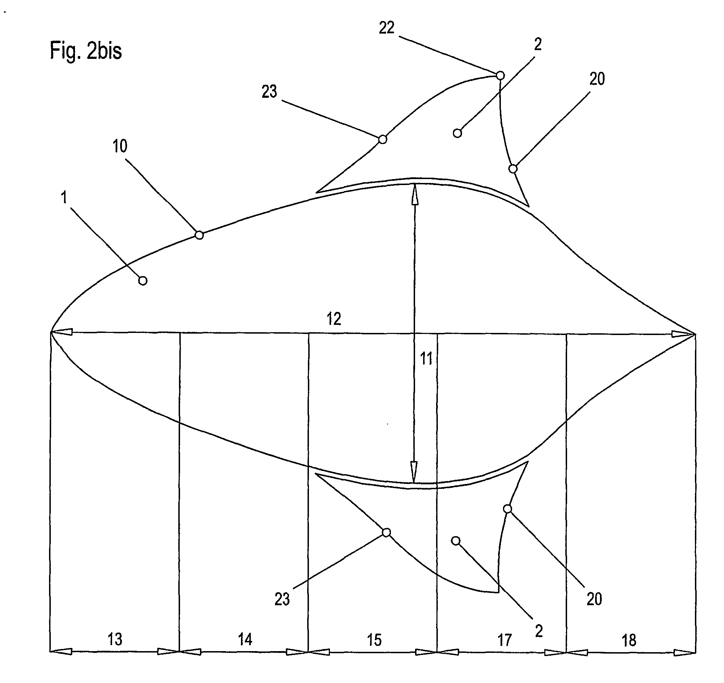

Die Figur 2bis zeigt den Rumpf mit den Flügeln in der alternativen Ausführungsform.

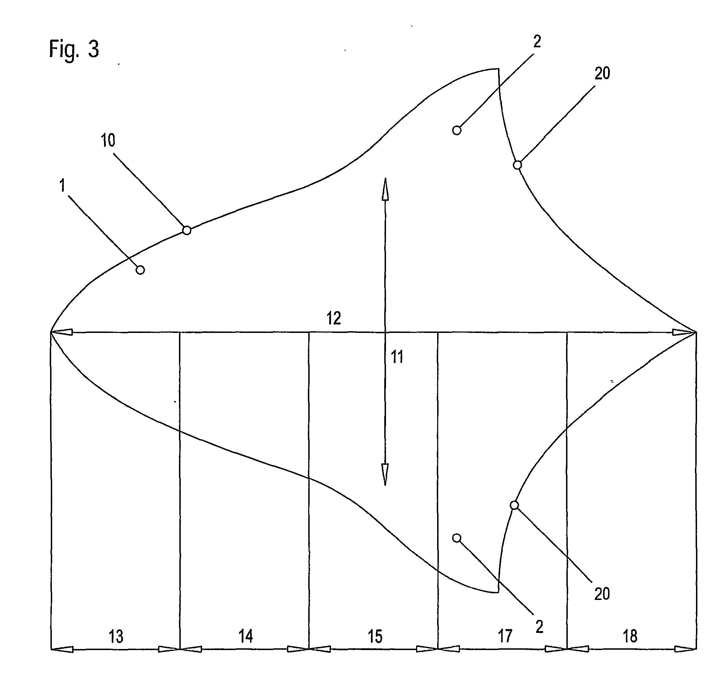

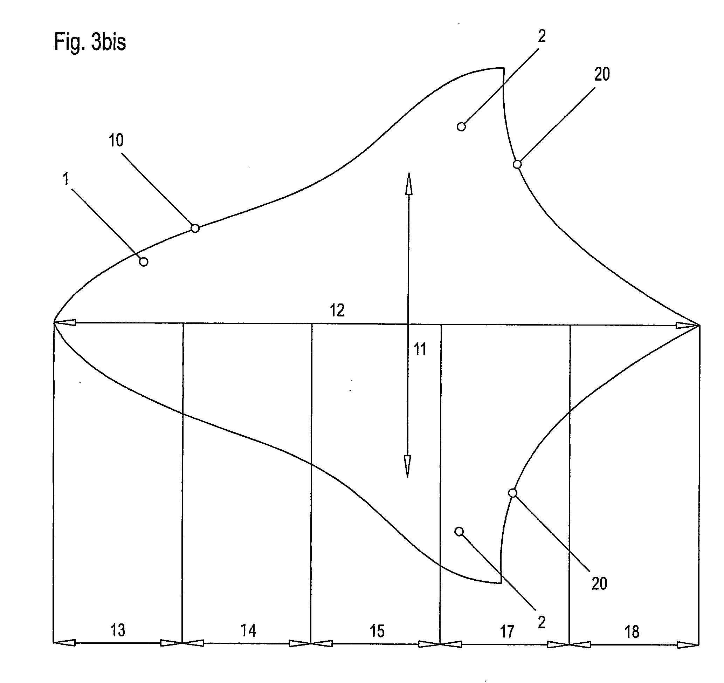

Die Figur 3 zeigt den Rumpf mit übergangslos integrierten Flügeln.

Die Figur 3bis zeigt den Rumpf mit übergangslos integrierten Flügeln in der alternativen Ausführungsform.

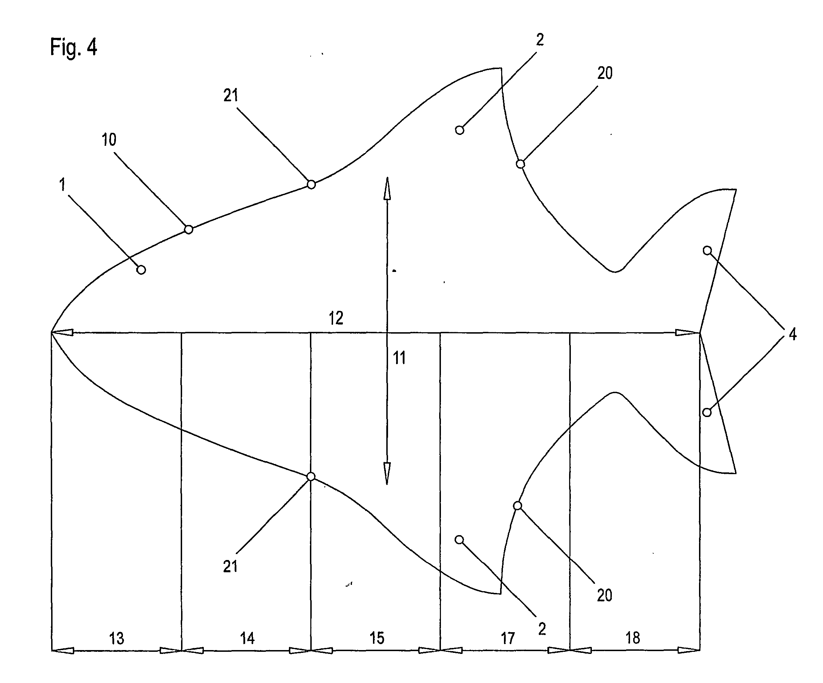

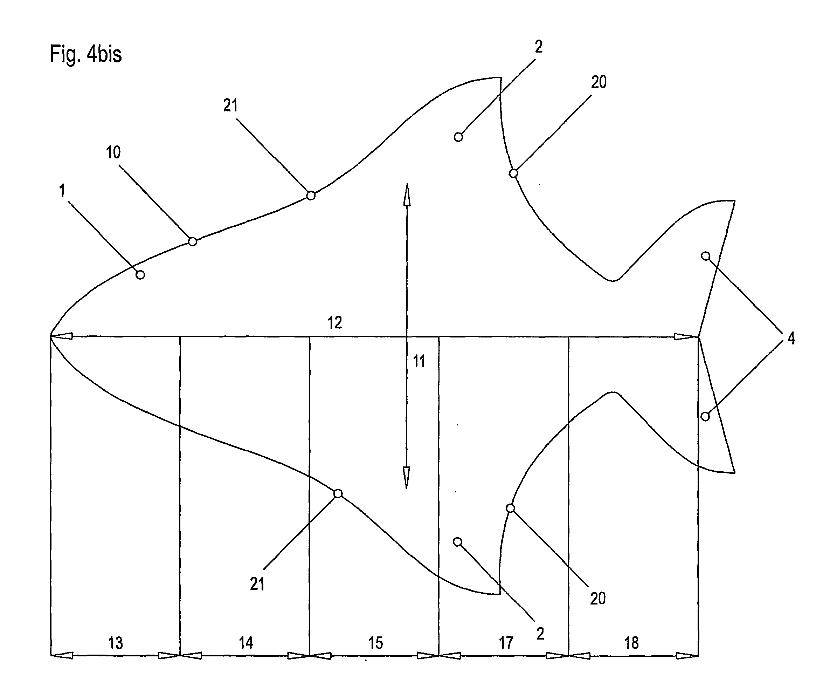

Die Figur 4 zeigt den Rumpf mit übergangslos integrierten Flügeln und mit einem Höhenleitwerk.

Die Figur 4bis zeigt den Rumpf mit übergangslos integrierten Flügeln und mit einem Höhenleitwerk in der alternativen Ausführungsform.

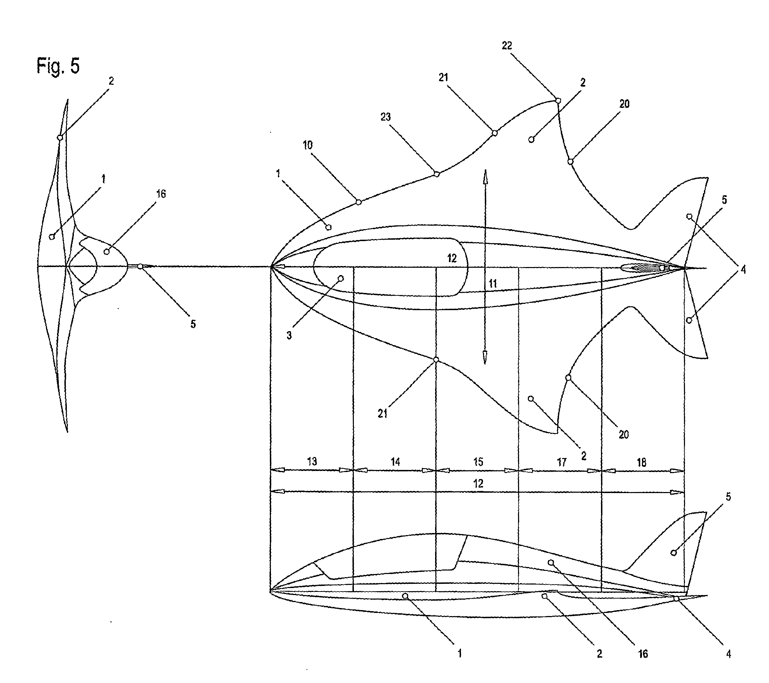

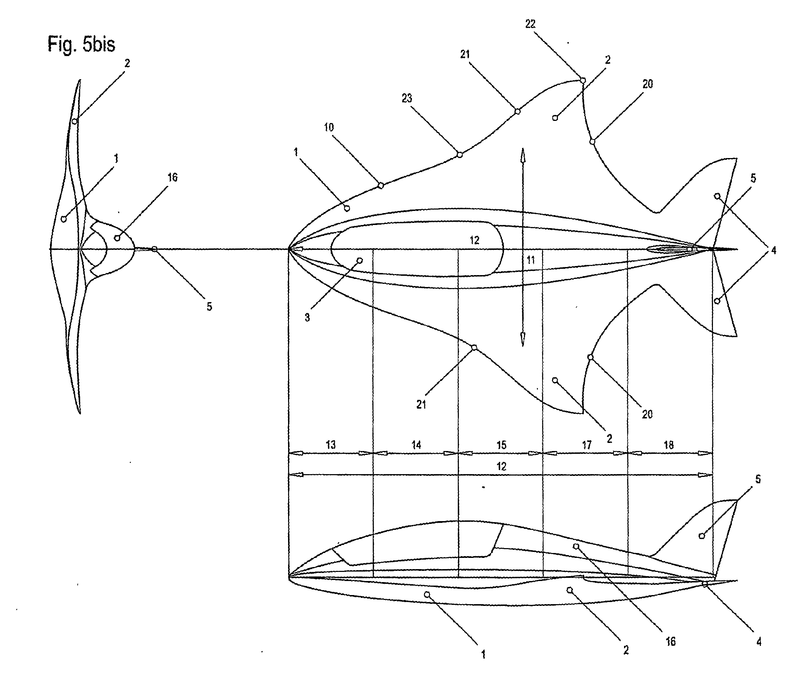

Die Figur 5 zeigt drei verschiedene Ansichten des gesamten Fluggerätes mit dem Rumpf, mit den übergangslos integrierten Flügeln und mit einem übergangslos integrierten Höhenleitwerk.

Die Figur 5bis zeigt drei verschiedene Ansichten des gesamten Fluggerätes der alternativen Ausführungsform mit dem Rumpf, mit den übergangslos integrierten Flügeln und mit einem übergangslos integrierten Höhenleitwerk.

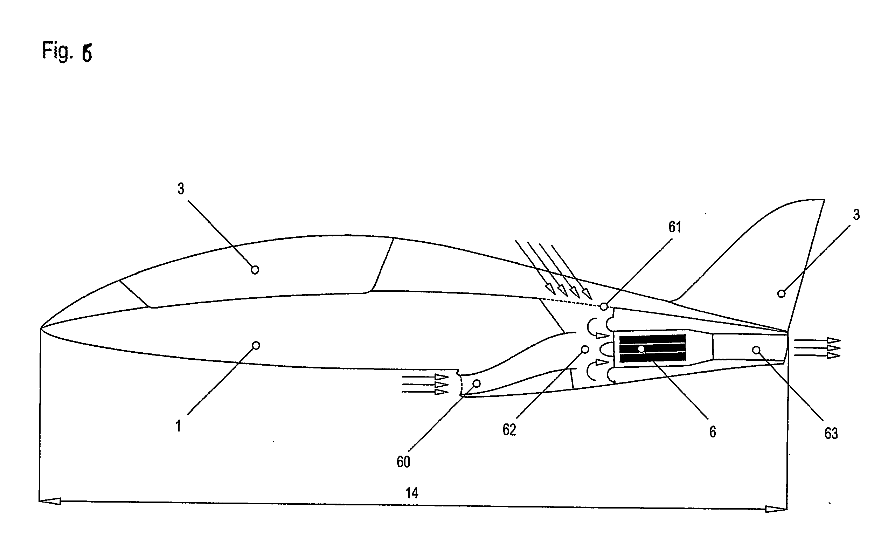

Die Figur 6 zeigt eine Seitenansicht des Fluggeräts.

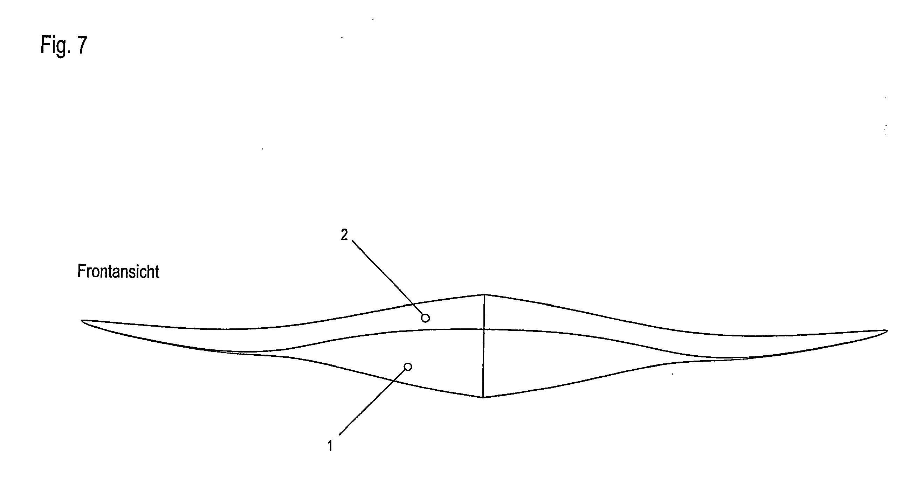

Die Figur 7 eine Frontansicht des Fluggeräts.

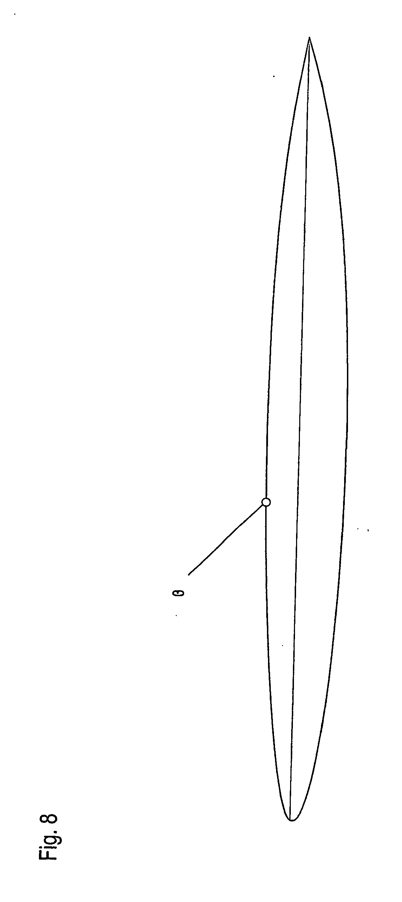

Die Figur 8 zeigt das longitudinale, negativ gewölbte Profil des Rumpfes.

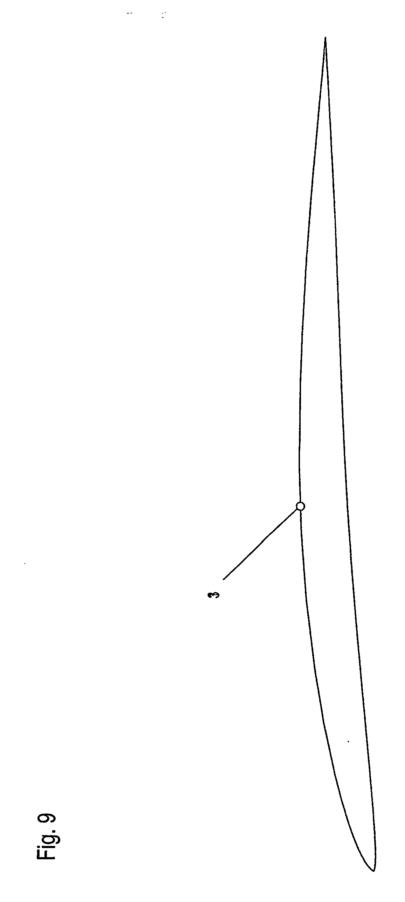

Die Figur 9 zeigt das longitudinale, positiv gewölbte Profil der Flügel

Eine elliptische Auftriebsverteilung ist die effizienteste Art, um mit einem ebenen Flügel Auftrieb zu erzeugen. Flügel mit kleiner Streckung haben fast elliptische Auftriebsverteilungen für einen grossen Bereich von Verjüngung und Pfeilung. Flügel mit grosser Streckung sind diesbezüglich viel heikler, da braucht es nicht viel um mit einer anderen Verjüngung des Flügels oder einer nicht ganz korrekten Schränkung des Flügels die Auftriebsverteilung zu ändern.

Der schädliche Widerstand von umströmten Körpern ist am kleinsten, wenn die Strömung dreidimensional um den Körper strömen kann.

Ausgehend von diesen Überlegungen ist es also vorteilhaft, wenn die Auftriebsfläche so gestaltet wird, dass sie dreidimensional umströmt werden kann.

Es ist daher vorteilhaft, wenn der Grundriss der Auftriebsfläche ein aerodynamisches Profil aufweist. Dadurch kann die Strömung nicht nur über und unter der Auftriebsfläche fliessen, sondern auch seitwärts um die Auftriebsfläche. Die Figur 1 zeigt ein Beispiel des Grundrisses eines Rumpfes, der als Auftriebsfläche wirkt und nach diesem Prinzip gestaltet ist. Die Figur 1 bis zeigt eine weitere Ausführungsform.

In diesem Falle entspricht der Grundriss des Rumpfes einem symmetrischen Profil, dessen Dicke (Spannweite) 50% der Länge entspricht. Hier scheint ein Wert zwischen 30 und 60%, vorzugsweise zwischen 40 und 50%, vorteilhaft zu sein.

Der Grundriss und der Seitenriss der beschriebenen Grundform haben beide aerodynamische Profile, im Gegensatz zu herkömmlichen Fluggeräten, bei welchen nur der Seitenriss aerodynamisch vorteilhaft ist.

Mit diesem Grundriss ist der schädliche Widerstand minimal. Der induzierte Widerstand ist aber durch die kleine Streckung gross. Dort wo die Seitenkanten ungefähr parallel verlaufen, also ungefähr an der Stelle der grössten Spannweite 11, entsteht bei kleinen Anstellwinkeln ein Druckausgleich. Luft von der Auftriebsflächenunterseite strömt auf die Auftriebsflächenoberseite. Dieser Effekt findet schon statt bevor die grösste Spannweite erreicht ist. Je grösser der Anstellwinkel und somit der Auftrieb, umso weiter vorne beginnt die Luft von der Auftriebsflächenunterseite auf die Auftriebsflächenoberseite zu fliessen. Also muss genau an dieser Stelle ein kleiner Flügel 2 befestigt werden. Dadurch kann der induzierte Widerstand wesentlich verkleinert werden. Erfindungsgemäss sieht dann die Auftriebsfläche des Rumpfes und der Flügel aus wie auf der Figur 2 und 2bis dargestellt.

Die Flügeleintrittskante ist innen stark nach vorne gerichtet und weist eine von vorne nach hinten zuerst konkave und dann konvexe Form auf. Aerodynamische Tests haben gezeigt, dass die Flugeigenschaften optimal sind, wenn der Winkel der Tangente der benannten Kurve am Wendepunkt 23 zwischen dem konkaven Segment und dem konvexen Segment einen Winkel zwischen 10° und 55°, vorzugsweise zwischen 25 und 55°, zur Längsachse 12 des Fluggeräts aufweist, und wenn dieser Wendepunkt 23 sich ungefähr in der Mitte der Flügeleintrittskante befindet.

Die Austrittskante 20 der Flügel 2 weist hingegen am Wingtip 22 einen Winkel normal zur Längsachse 12 des Fluggeräts auf. In einer Variante weist die Austrittskante einen Winkel zwischen 45° und 135°, vorzugsweise zwischen 60° und 120°, vorzugsweise aber zwischen 70° und 110°, vorzugsweise aber zwischen 80° und 100° zur Längsachse 12 des Fluggeräts auf. So werden die Randwirbel nicht nach innen gezogen.

Um den Interferenzwiderstand so klein wie möglich zu halten, ist der Übergang zwischen dem Rumpf und den Flügeln 2 übergangslos gestaltet (Figur 3 beziehungsweise 3bis). So kann nicht genau gesagt werden, wo der Rumpf 1 aufhört und wo die Flügel 2 beginnen. Dadurch werden die Ursachen für schädliche Interferenzwiderstände weitgehend vermieden. Der Rumpf und die Flügel können als eine Einheit gestaltet werden.

Beste Flugleistungen (im Sinne von maximaler Gleitzahl) von Flugzeugen mit kleiner Streckung sind bei kleinen Auftriebsbeiwerten zu erzielen. Demzufolge müssen die Momentenbeiwerte auch sehr klein sein, weil sonst der Trimmwiderstand zu gross wird.

Erfindungsgemäss wird dies so gelöst, indem das longitudinale mittlere Profil ungefähr symmetrisch ist. Dies wird beispielsweise erreicht, indem das longitudinale Profil des Fluggeräts keine, oder nur eine negative Wölbung aufweist (Fig. 8). Das longitudinale Profil der Flügel kann leicht positiv gewölbt sein (Fig. 9).

Die Profile des Rumpfes und der Flügel haben einen unterschiedlichen Nullauftriebswinkel. Das Profil der Flügel und das Profil des Rumpfes werden so gestaltet, dass beide bei einem bestimmten Anstellwinkel des Fluggeräts keinen Auftrieb erzeugen. Dies wird erreicht, indem das Profil des Flügels mit einem um einige Grad kleineren Anstellwinkel angeordnet wird als das Profil des Rumpfes.

Vorzugsweise entspricht die Einstellwinkeldifferenz zwischen dem Profil der Flügel und dem Profil des Rumpfes ungefähr der Summe der Nullauftriebswinkel. In einer Variante entspricht die Einstellwinkeldifferenz zwischen dem Profil der Flügel und dem Profil des Rumpfes ungefähr der Differenz der Nullauftriebswinkel.

In einer Variante haben die Flügel auch ein symmetrisches Profil, haben aber einen kleineren Anstellwinkel als der Rumpf.

Der Übergang vom symmetrischen oder negativ gewölbten Profil des Rumpfes (mit positivem Momentenbeiwert) zum positiven gewölbten Profil des Flügels (mit negativem Momentenbeiwert) erfolgt fliessend.

Auch die Veränderung zwischen dem kleinen Anstellwinkel der Flügel und dem grösseren Anstellwinkel des Rumpfes erfolgt progressiv.

Durch die Verwendung von Profilen mit keiner oder nur sehr wenig Wölbung kann der Trimmwiderstand klein gehalten werden.

Durch diese Massnahme kann ausserdem erreicht werden, dass die Auftriebsfläche, gebildet durch Flügel und Rumpf, über einen grossen Geschwindigkeitsbereich einen sehr kleinen Momentenbeiwert hat. Dies wiederum führt dann zu nur kleinen Trimmkräften und entsprechend guten Flugleistungen.

Ein weiterer Vorteil dieser Massnahme ist die Verbesserung der Flugleistungen und Flugeigenschaften im Langsamflug. Dies deshalb, weil der induzierte Anstellwinkel der Flügel durch die 3-D Umströmung des Rumpfes grösser ist als der Anstellwinkel des Rumpfes. Um nun ein vorzeitiges Abreissen der Strömung an den Flügeln zu verhindern respektive zu verzögern ist es von Vorteil, wenn die Eintrittskante in diesem Bereich nach unten gezogen wird, d.h. ein Profil mit positiver Wölbung für die Flügel verwendet, und wenn zusätzlich der Anstellwinkel der Flügel kleiner als der Anstellwinkel des Rumpfes gewählt wird.

Die Druckverteilung wird durch diese Änderung nicht negativ beeinflusst, da bei Flügeln mit kleiner Streckung die Auftriebsverteilung über einen grossen Bereich von Schränkungen und Grundrissen weitgehend elliptisch ist.

Damit das Fluggerät gesteuert werden kann ist ein Leitwerk 4 notwendig. Der Hebelarm muss lang genug sein, damit mit kleinen Steuerkräften ein genügend grosses Moment erzeugt werden kann. Ein längerer Hebelarm hat ausserdem den Vorteil, dass der Trimmwiderstand reduziert wird. Damit dies gewährleistet werden kann ist es von Vorteil, wenn das Leitwerk 4 möglichst weit hinten am Rumpf angeordnet ist, wie auf Figur 4 dargestellt.

Damit kein Interferenzwiderstand auftritt, wird auch hier ein fliessender Übergang zwischen dem Rumpf und dem Leitwerk angestrebt. Das Fluggerät sieht dann wie auf Figur 5 oder 5bis dargestellt aus.

Es kann nicht genau definiert werden, wo der Rumpf 1 aufhört und wo das Höhenleitwerk 4 beginnt. Wenn die Spannweite des Höhenleitwerks gross genug gewählt wird ist es sogar möglich, dass das Höhenleitwerk 4 auch die Funktion des Querruders übernehmen kann.

Das Cockpit 1 kann teilweise im Rumpf 1 integriert werden. Vorteilhaft ist es, wenn das Cockpit 1 und der Rumpf ungefähr dieselbe Länge haben und wenn der Übergang zwischen Cockpit und Rumpf fliessend gestaltet wird, wie auf Figur 5 dargestellt:

Die Druckverteilung auf Rumpf und Flügel ist bei gleicher Flügel / Rumpftiefe praktisch identisch. Die Variation ist nur klein. Dies bedeutet dass es nur wenig oder keinen Interferenzwiderstand gibt.

Eine möglichst flache Auftriebsverteilung, d.h. ein möglichst gleich bleibender Auftriebsbeiwert für die ganze Auftriebsfläche, hat den weiteren Vorteil, dass dadurch das Entstehen von Stössen / Schockwellen erst bei höheren Geschwindigkeiten erfolgt als bei einer Auftriebsfläche, die eine unregelmässige Auftriebsverteilung und somit Bereiche mit einem grossen Auftriebsbeiwert hat.

Das erfindungsgemässe Design hat einige aerodynamische Vorteile:

Durch die Formgebung mit der starken Pfeilung der Eintrittskante ergibt sich eine hohe kritische Machzahl. Dies bedeutet, dass die Reisegeschwindigkeit in der Nähe der Schallgeschwindigkeit ist, womit im Vergleich zu herkömmlichen Fluggeräten mit Flügeln grosser Streckung die Reisegeschwindigkeit erhöht und somit die Reisezeit verkürzt wird. Durch die besondere Formgebung der Auftriebsfläche und die fliessenden Übergänge am gesamten Fluggerät wird der schädliche Widerstand (mit Ausnahme des induzierten Widerstandes) kleiner sein als bei herkömmlichen Fluggeräten.

Durch die starke Pfeilung der Eintrittskante entstehen bei hohen Anstellwinkeln, wie sie typischerweise bei Start und Landung auftreten, Wirbel auf der Auftriebsflächenoberseite, ähnlich wie bei einem Deltaflügel. Diese Wirbel erzeugen zusätzlichen Auftrieb, so dass für ein erfindungsgemässes Fluggerät auf zusätzliche Auftriebshilfen wie Landeklappen etc. verzichtet werden kann. Dies wird noch begünstigt durch die relativ geringe Flächenbelastung, welche moderate Start und Landegeschwindigkeiten ermöglicht selbst bei kleinen Auftriebsbeiwerten.

Beim Deltaflügel können diese Wirbel unter bestimmten Bedingungen aufplatzen (Vortex Burst), so dass der Auftrieb an dieser Stelle plötzlich reduziert wird. Die beim asymmetrischen Aufplatzvorgang entstehenden Roll / Gierbewegung (Departure) beim Deltaflügel ist ein Problem, speziell für die Zulassung.

Die Form des erfindungsgemässen Fluggeräts ermöglicht es, dieses Problem zu lösen, indem die Stelle, wo Wirbel aufplatzen, durch die Formgebung der Eintrittskante definiert und symmetrisch stabilisiert wird. Zuerst nimmt die Pfeilung der Eintrittskante mit zunehmender Spannweite zu. Dies begünstigt das Entstehen eines Wirbels. Ab einer bestimmten Stelle der Spannweite wird dann die Pfeilung der Spannweite wieder kleiner. Der Wirbel platzt ungefähr dort auf, wo die Pfeilung der Eintrittskante wieder kleiner wird, eventuell etwas dahinter.

Durch die Geometrie der Eintrittskante wird der Wirbelzusammenbruch also stabilisiert.

Die Langsamflugeigenschaften werden durch die Wirbel massgeblich beeinflusst. Je grösser der Anstellwinkel, umso stärker die Wirbelbildung auf der Auftriebsflächeoberseite. Das erfindungsgemässe Fluggerät hat daher günstige Langsamflugeigenschaften.

Ein Nachteil aber kann der hohe Anstellwinkel bei Start und Landung sein, der höher ist als bei konventionellen Flugzeugen. Dadurch wird auch das Fahrwerk länger, was mehr Gewicht und Luftwiderstand zur Folge hat. Dieser Nachteil kann minimiert werden, indem die Auftriebsfläche so gestaltet wird, dass der Neutralpunkt / Druckpunkt und somit auch der Schwerpunkt relativ weit hinten zu liegen kommt. Dies kann beispielsweise dadurch erreicht werden, dass die Stelle der maximalen Spannweite der Flügel bei 60% bis 80%, vorzugsweise bei 66.66 bis 80%, der Rumpflänge zu liegen kommt. Dadurch kann das Fahrwerk weiter hinten angeordnet und dementsprechend kürzer gestaltet werden.

Dadurch, dass das Höhenleitwerk bei entsprechender Auslegung auch als Querruder verwendet werden kann, ist es nicht notwendig am Rumpf oder am Flügel ein Querruder zu befestigen. Dies ermöglicht eine Konstruktion mit nur sehr wenigen beweglichen Teilen (Steuerflächen).

Durch den langen Hebelarm sind nur kleine Kräfte am Höhenleitwerk notwendig, um die Momente auszugleichen. So sind die Abtriebskräfte am Höhenleitwerk bei entsprechender Auslegung des Designs der Auftriebsfläche (Profile mit wenig oder gar keiner Wölbung, oder aber negative Wölbung für das Profil des Rumpfes und ein positiv gewölbtes Profil für die Flügel mit kleinerem Anstellwinkel als das Profil des Rumpfes) relativ gering, woraus sich ein geringer Trimmwiderstand ergibt. Auch ist bei einer solchen Konstruktion keine künstliche Stabilisierung notwendig.

Durch die grosse Auftriebsfläche gibt es einen kleinen Ca-Auftriebsbeiwert und somit sanfte und kleine Druckveränderungen. Dadurch kann eine mindestens teilweise laminare Grenzschicht erreicht werden, so dass der Widerstand reduziert wird. Dies wird durch das Fehlen eines Vorderrumpfes und die fliessend verlaufende Eintrittskante erreicht. Die linke und die rechte Eintrittskante 10 von der Spitze des Fluggeräts bis zur grössten Spannweite bilden jeweils eine stetige Linie mit zwei Wendepunkten. Ausserdem verlaufen sowohl die die transversale Querschnittfläche als auch die transversale Umrisslänge von der Spitze des Fluggeräts bis zur grössten Spannweite fliessend und stetig. Dadurch entstehen keine Störungen wie bei einem herkömmlichen Flugzeug, bei dem die Grenzschicht des Rumpfes Störungen an der Grenzschicht des Tragflügels hervorrufen kann und die Grenzschicht von laminar auf turbulent umschlägt, so dass der Reibungswiderstand dadurch erhöht wird.

Des Weiteren ist es günstig, wenn die grösste Dicke der Profile des Rumpfes und des Flügels relativ weit hinten angeordnet sind. Auch dies begünstigt die mindestens teilweise Laminarhaltung, vor allem im vorderen Bereich, dank Verschiebung des Druckminimums nach hinten.

Ein weiterer Vorteil der vorliegenden Erfindung ist, dass der Umfang bis ungefähr in die Mitte der Länge des Fluggerätes stetig zunimmt. Dies führt zu einer dünnen Grenzschicht, was wiederum günstig ist um wenig Luftwiderstand zu erzeugen.

Die kleine Flächenbelastung führt zusammen mit der gleichmässigen Druckverteilung auch zu einem kleinen minimalen Cp auf dem Rumpf. Dies wiederum ermöglicht hohe Geschwindigkeiten im transsonischen Bereich, ohne dass Stösse auftreten. Dieser Effekt kann noch verbessert werden mit der Verwendung von sogenannt superkritischen Profilen, die speziell für den Reiseflug mit hohen Geschwindigkeiten entwickelt worden sind.

Ein weiterer Vorteil der vorliegenden Erfindung ist die sich aus dem grossen Volumen ergebenden Möglichkeiten betreffend der Triebwerkinstallation. Würde pro Triebwerk ein einziger fixer Einlauf angeordnet, entstünde beim Start und Steigflug ein Schubverlust, im Reiseflug hingegen Widerstand, da ein Teil der Luft aussen um den Einlauf herumfliessen muss.

Dieses Problem wird erfindungsgemäss so gelöst, indem das oder die Triebwerke 6 in den Rumpf 1 integriert werden, wie man es auf Figur 6 sehen kann. Dies ist möglich dank dem sich aus dem Gesamtkonzept ergebenden grossen internen Volumen.

Die Integration der Triebwerke 6 in den Rumpf ermöglicht das Anbringen von Hilfs-Lufteinlässen 61 auf der Rumpfoberseite (Tragflächenoberseite). Mit diesen oberen Lufteinlässen kann der Schub beim Start, Steigflug oder wenn eine maximale Leistungsstärke benötigt wird, maximiert werden. Beim Reiseflug werden die oberen Hilfs-Lufteinlässe 61 auf der Rumpfoberseite geschlossen, so dass nur kleinere, auf der Rumpfunterseite (Tragfläche) angeordneten Lufteinlässe 60 verwendet werden. Dadurch wird der Gesamtwirkungsgrad des Antriebs erhöht, weil einerseits die Grenzschicht auf der Tragflächenunterseite dünner ist, und weil andererseits die lokale Anströmmachzahl auf der Unterseite wesentlich kleiner ist als auf der Oberseite.

Die Hilfs-Lufteinlässe 61 sind vorzugsweise gleichlaufend im Profil der Oberseite integriert; geschlossen bilden sie eine annähernd glatte Aussenfläche auf der Rumpfoberseite. Damit sie beim Reiseflug automatisch geschlossen werden, sind sie vorzugsweise mit nicht dargestellten selbsttätigen Rückschlagklappen oder Ventilen versehen. Sobald der Druck auf der Aussenseite der Rückschlagklappen 62 kleiner als der Druck auf der Innenseite, zum Beispiel beim Reiseflug, wird, werden diese Klappen geschlossen. Beim Abheben werden aber die Ventile automatisch durch den Unterdruck geöffnet, so dass mehr Luft in die Triebwerke gelangt und ein maximaler Schub erwirkt wird.

Die Luftströme vom oberen und unteren Einlauf werden konzentrisch in einer im Rumpf integrierten Airbox 62 zusammengeführt. Der Luftstrom von dem oder den Einläufen 60 auf der Unterseite wird ins Zentrum der Airbox geführt, während der Luftstrom von den oberen Hilfs-Einläufen 61 über einen Ringschlitz oder eine Ringfläche 64 nach innen geführt wird. Die Hinterkante dieses Ringschlitzes 64 ist mit einer Lippe mit grossem Radius versehen. Diese Einlauflippe ist notwendig damit die Strömung am Triebwerkseinlauf nicht abreisst.

In einer Variante wird der untere Einlauf 60 beim Startflug geschlossen, damit möglichst kein Schmutz in das Triebwerk gesaugt wird. Dieser Einlauf kann beispielsweise so lange geschlossen werden, wie das Fahrwerk ausgefahren ist.

Durch diese Konstruktion der Airbox 62 mit dem Ringschlitz 64 und der Ringfläche kann eine gleichmässigere Verteilung der Geschwindigkeit der in das Triebwerk 6 strömenden Luft erreicht werden. Als Variante oder zusätzlich dazu könnte auch ein Leitschaufel und/oder ein Ringschlitz in der Airbox verwendet werden.

Der Gasaustritt 63 des oder der Triebwerke liegt am Ende des Rumpfes 1 und hat vorzugsweise einen kreisförmigen oder ungefähr kreisförmigen Querschnitt. Im Falle von zwei Triebwerken hat jeder Austritt einen halbkreisförmigen Querschnitt, so dass der Austrittsquerschnitt insgesamt wiederum kreisförmig ist.

Ein weiterer Vorteil der Konstruktion ist die Tatsache, dass ein nicht dargestellter Holm hinter dem Cockpit 3 vorgesehen werden kann. Bei konventionellen Flugzeugsdesigns ist dies ein Problem. Da wird oft ein Verstärkungsholm unter dem Rumpf durchgeführt, der aber zu einem zusätzlichen Luftwiderstand führt.

Das erfindungsgemässe Fluggerät hat folgende weitere Vorteile:

Struktur

- wenig Biegebeanspruchung der Zelle

- geringes Gewicht der Struktur

- langer Leitwerkshebelarm

- kleine Steuerflächen genügen

Sicherheit

- keine künstliche Stabilisierung nötig

- kein Strömungsabriss wie bei herkömmlichen Fluggeräten

- Oberfläche relativ unempfindlich auf Veränderungen, Flugsicherheit ist auch mit Eisansatz noch gewährleistet.

- Die Flügelstruktur muss keine Landungsschocks übertragen, da diese vom Fahrwerk direkt in das Rumpfgerüst eingeleitet werden.

Wartung / Betrieb

- Durch wenige Bauteile nur geringen Wartungsaufwand.

- keine künstliche Stabilisierung nötig, keine aufwendige Elektronik

- dank der kompakten Bauweise wenig Hangarplatz nötig

Lärmemissionen / Umwelt

- Keine Landeklappen, so dass die Geräuschentwicklung beim Landeanflug nicht gross sein wird.

- Triebwerkseinläufe 61 für Start und Steigflug sind auf der Flügeloberseite angeordnet. Die Triebwerke strahlen so in dieser lärmkritischen Flugphase weniger Lärm nach unten ab als konventionelle Triebwerksinstallationen.

- Der Treibstoff kann besser verteilt werden, somit kann der Trimmwiderstand möglichst klein gehalten werden durch Umpumpen von Treibstoff oder Sequentieller Entleerung.

- Grosser Treibstoffvorrat kann mitgenommen werden, ohne dass Widerstand erzeugende Zusatztanks notwendig sind.

- Der Flügel weist eine hohe Flattersicherheit auf dank hoher Steifigkeit aus geometrischen Gründen, geringer Strukturmasse und vorzugsweise Wegfall der Querruder. Es entstehen quasi keine Biegemomente bei dieser Konstruktion. Dadurch kann das Zellengewicht sehr klein gehalten werden.

- Durch das geringe Strukturgewicht wird der Anteil der Fracht am Gesamtgewicht wesentlich höher ausfallen als bei konventionellen Flugzeugen. Dadurch wird der Treibstoffverbrauch pro Kilogramm transportierte Fracht tiefer ausfallen als bei herkömmlichen Flugzeugen.

Crashsicherheit von Fluggeräten

im erfindungsgemässen Fluggerät kann ein grosser Teil des Strukturgewichts auf den Rumpf entfallen. Dieser kann somit stabiler gebaut werden als bei herkömmlichen Fluggeräten, was die Sicherheit der Passagiere bei leichten Unfällen erhöht.

Da die Auftriebsfläche nur eine geringe Spannweite hat und zudem eine wesentlich grössere Bauhöhe hat als der Flügel bei einem konventionellen Fluggerät, sind die auf die Struktur wirkenden Kräfte und Momente kleiner als bei konventionellen Fluggeräten. Die Triebwerke 6 befinden sich im voluminösen Auftriebskörper, und werden weder von den Flügeln 2 noch von schlanken Pylons getragen.

Wegen der geringeren Start- und Landegeschwindigkeiten, ist auch die Gefährdung für die Passagiere im Falle einer Bruchlandung geringer. Der Treibstoff wird weit entfernt von den Ansatzpunkten für Fahr- und Triebwerke mitgeführt. Die Triebwerke liegen nicht wie bei vielen konventionellen mehrmotorigen Fluggeräten unter den mit Treibstoff gefüllten Flügeln.

Gegenüber reinen Nurflügel-Fluggeräten hat die erfindungsgemässe Konstruktion den Vorteil, dass die aerodynamischen Charakteristiken des Fluggeräts wie Längsstabilität und Längskontrolle, Seitenstabilität und -kontrolle verbessert sind. Das Volumen des Rumpfs ist deutlich höher, ohne dass dabei die aerodynamische Effizienz beeinträchtigt wird. Der zulässige Schwerpunktsbereich ist deutlich grösser.

Das erfindungsgemässe Design hat den weiteren Vorteil, wesentlich mehr Volumen aufnehmen zu können als ein üblicher Zylinder-Rumpf, wodurch der pro Passagier zur Verfügung stehende Platz vergrössert werden oder sperrige Lasten befördert werden können. Für den Einbau der Ausrüstung steht mehr Platz zur Verfügung, was die Zugänglichkeit für die Wartung verbessern kann.

Das gesamte Volumen V, das im erfindungsgemässen Fluggerät für die Struktur, Systeme, Passagierraum, Frachtraum, Cockpit, Fahrwerk, Tanks etc. zur Verfügung steht, hat folgendes Verhältnis zur Länge L (12) und zur maximalen Spannweite I des Fluggeräts inklusive Flügel:

$$V = \frac{L \bullet l \bullet \sqrt{L \bullet l}}{k}$$

wobei der Faktor k zwischen 10 und 60, typischerweise um 30, liegt.

Bei gleicher Triebwerksleistung verglichen mit einem klassischen Fluggerät kann somit mehr Nutzvolumen schneller befördert werden.

Ausserdem weist das Fluggerät vorzugsweise eine Streckung von $\lambda < 3$ ($\lambda = l^2/S$, wobei I die Flügelspannweite und S die Auftriebsfläche darstellen).

Es ist möglich, ein Fluggerät mit geringer Strekkung zu konstruieren, das aus einer Kombination der meisten der vorgängig beschriebenen Merkmale besteht. So kann mittels der Formgebung der Auftriebsfläche der induzierte und der schädliche Widerstand herabgesetzt werden und das Höhenleitwerk kann zusätzlich dazu so angeordnet werden, dass der schädliche Widerstand weiter herabgesetzt wird. Mittels der Integration des oder der Triebwerke in den Rumpf kann ein optimaler Wirkungsgrad für die Kombination Einlauf / Triebwerk erzielt werden. So ein Fluggerät wird im Reiseflug sehr wenig Leistung benötigen, da einerseits durch die kompakte Konstruktion das Gewicht gering, andererseits der Luftwiderstand durch die vorgängig beschriebenen Massnahmen sehr klein sein wird. Zudem ist so ein Fluggerät sehr einfach aufgebaut, es sind keine Landeklappen oder ähnliches notwendig, lediglich für die Steuerung sind Quer-, Höhen- und Seitenruder notwendig. Ein Sportflugzeug könnte beispielsweise durch eine Turbine am Heck angetrieben werden. Dadurch wird die Umströmung des Rumpfes nur minimal gestört.

Das beanspruchte Fluggerät kann gross genug sein, um Passagiere und/oder Fracht zu transportieren, oder auch als Modelfluggerät, unbemanntes Fluggerät, Drohne, usw. gebaut werden.

**Patentansprüche**

1. Fluggerät mit:

einem Auftrieb erzeugenden Rumpf (1), dessen Grundriss sich im ersten Fünftel (13) und im letzten Fünftel (18) progressiv verjüngt, zwei Flügel (2), wobei die Fläche der Projektion beider Flügel in einer horizontalen Ebene weniger als vierzig Prozent der gesamten Auftriebsfläche darstellt,

einem Höhenleitwerk (4) am letzten Fünftel (18) des Rumpfes,

wobei das longitudinale mittlere Profil des Fluggeräts entweder keine oder eine negative Wölbung aufweist,

und wobei das longitudinale Profil der Flügel positiv gewölbt ist.

2. Das Fluggerät des Anspruchs 1, in welchem das longitudinale mittlere Profil des Fluggeräts eine mindestens teilweise negative Wölbung aufweist.

3. Das Fluggerät des Anspruchs 2, in welchem die grösste Spannweite (11) des benannten Auftrieb erzeugenden Rumpfes (1) im dritten (15) oder vierten Fünftel (17) der Gesamtlänge liegt, und in welchem die maximale Spannweite der Flügel sich im vierten Fünftel (17) der Gesamtlänge des benannten Rumpfes befindet.

4. Fluggerät gemäss Anspruch 3, dessen grösste Spannweite (11) sich zwischen 40% und 80% der Gesamtlänge des benannten Rumpfes befindet.

5. Fluggerät gemäss Anspruch 4, dessen grösste Spannweite (11) sich zwischen 66% und 80% der Gesamtlänge des benannten Rumpfes befindet.

6. Fluggerät gemäss einem der Ansprüche 1 bis 4, in welchem das Profil des Rumpfes einen positiven Momentenbeiwert aufweist während das Profil der Flügel einen negativen Momentenbeiwert aufweist.

7. Fluggerät gemäss einem der Ansprüche 1 bis 6, in welchem die Fläche der Projektion beider Flügel (2) in einer horizontalen Ebene weniger als dreissig Prozent der gesamten Auftriebsfläche darstellt.

8. Fluggerät gemäss einem der Ansprüche 1 bis 7, in welchem die Fläche der Projektion beider Flügel (2) in einer horizontalen Ebene weniger als zwanzig Prozent der gesamten Auftriebsfläche darstellt.

9. Fluggerät gemäss einem der Ansprüche 1 bis 8, in welchem die Fläche der Projektion beider Flügel (2) in einer vertikalen Ebene weniger als 60 Prozent der Fläche der Projektion beider Flügel in einer horizontalen Ebene darstellt.

10. Fluggerät gemäss einem der Ansprüche 1 bis 9, in welchem die Spannweite des benannten Höhenleitwerks (4) mindestens 90% der maximalen Spannweite des Rumpfes (1) hat.

11. Fluggerät gemäss einem der Ansprüche 1 bis 10, in welchem das Verhältnis zwischen der Auftriebsfläche des benannten dritten (15) und vierten Fünftels (17) des Fluggerätes einschliesslich den Flügeln (2), und der Auftriebsfläche des ersten (13) und zweiten Fünftels (14) des Fluggerätes zwischen 1.5 und 3.0 liegt,

und in welchem das Verhältnis zwischen der Auftriebsfläche des benannten dritten (15) und vierten Fünftels (17) des Fluggerätes, einschliesslich den Flügeln (2), und der Auftriebsfläche des letzten Fünftels (18) des Rumpfes zwischen 5.0 und 15 liegt.

12. Fluggerät gemäss einem der Ansprüche 1 bis 11, mit einem Cockpit (3), das zum Teil in einer Verdikkung (16) auf der Rumpfoberseite angebracht ist, wobei die benannte Verdickung (16) gleich lang ist wie der benannte Rumpf (1).

13. Fluggerät gemäss Anspruch 12, in welchem das benannte Cockpit (3) teilweise im benannten Rumpf (1) integriert ist.

14. Fluggerät gemäss einem der Ansprüche 1 bis 13, in welchem die gesamte Konfiguration fliessende Übergänge aufweist, so dass nicht genau erkennbar ist, wo der benannte Rumpf (1) aufhört und wo die benannten Flügel (2) beginnen.

15. Fluggerät gemäss einem der Ansprüche 1 bis 14, bei welchem die Austrittskante (20) der benannten Flügel (2) am Wingtip (22) einen Winkel zwischen 60° und 120° zur Längsachse (12) des Fluggeräts aufweist.

16. Fluggerät gemäss Anspruch 15, bei welchem die Austrittskante (20) der benannten Flügel (2) am Wingtip (22) einen Winkel zwischen 70° und 110° zur Längsachse (12) des Fluggeräts aufweist.

17. Fluggerät gemäss Anspruch 16, bei welchem die Austrittskante (20) der benannten Flügel (2) am Wingtip (22) einen Winkel zwischen 80° und 100° zur Längsachse (12) des Fluggeräts aufweist.

18. Fluggerät gemäss Anspruch 17, bei welchem die Austrittskanten (20) der benannten Flügel (2) am Wingtip (22) einen Winkel von 90° zur Längsachse (12) des Fluggeräts aufweisen.

19. Fluggerät gemäss einem der Ansprüche 1 bis 18, bei welchem die Eintrittskante (21) der benannten Flügel (2) eine von vorne nach hinten zuerst konkave und dann konvexe Form aufweist, und in welchem der Winkel der Tangente der benannten Kurve am Wendepunkt (23) zwischen dem konkaven Segment und dem konvexen Segment einen Winkel zwischen 10° und 55° zur Längsachse (12) des Fluggeräts aufweist.

**20.** Fluggerät gemäss einem der Ansprüche 1 bis 19, in welchem die Flügel (2) einen kleineren Anstellwinkel als der Auftriebserzeugende Rumpf aufweisen.

**21.** Fluggerät gemäss einem der Ansprüche 1 bis 20, bei welchem die Steuerung um die Längsachse nur durch gegenseitigen Ausschlag des benannten Höhenleitwerks (4) erfolgt.

**22.** Fluggerät gemäss einem der Ansprüche 1 bis 21, in welchem die linke und die rechte Eintrittskante (10) von der Spitze des Fluggeräts bis zur benannten grössten Spannweite von vorne nach hinten zuerst eine konvexe, dann eine konkave und dann wieder eine konvexe Form aufweist.

**23.** Fluggerät gemäss einem der Ansprüche 1 bis 22, das eine Streckung von $\lambda < 3$ aufweist ($\lambda = l^2/S$, wobei l die Flügelspannweite und S die Auftriebsfläche darstellen).

**24.** Fluggerät gemäss einem der Ansprüche 1 bis 22, bei welchem das Verhältnis zwischen der Länge (12) und der maximalen Spannweite des Fluggeräts inklusive Flügel zwischen 0.5 und 1.5 liegt.

**25.** Fluggerät gemäss einem der Ansprüche 1 bis 24, bei welchem das Verhältnis zwischen der Länge (12) und der maximalen Spannweite des Fluggeräts inklusive Flügel zwischen 0.75 und 1.5 liegt.

**26.** Fluggerät gemäss einem der Ansprüche 1 bis 25, mit mindestens einem Triebwerk (6), das mindestens teilweise im Rumpf (1) integriert ist.

**27.** Fluggerät gemäss Anspruch 26, mit mindestens einem Triebwerkseinlauf (60) auf der Fluggerätunterseite.

**28.** Fluggerät gemäss einem der Ansprüche 26 oder 27, mit mindestens einem zusätzlichen Triebwerkseinlauf (61) auf der Fluggerätoberseite.

**29.** Fluggerät gemäss Anspruch 27, in welchem der benannte zusätzliche Triebwerkseinlauf (61) unabhängig vom Triebwerkseinlauf (60) auf der Fluggerätunterseite beim Start und/oder Steigflug geöffnet werden kann.

**30.** Fluggerät gemäss einem der Ansprüche 28 bis 29, in welchem der benannte zusätzliche Triebwerkseinlauf (61) eine annähernd glatte Aussenfläche auf der Rumpfoberseite bildet.

**31.** Fluggerät gemäss Anspruch 26, mit mindestens einem Triebwerkseinlauf (60) auf der Fluggerätoberseite.

**32.** Fluggerät gemäss einem der Ansprüche 1 bis 31, das eine Analogie zur Form eines Fisches aufweist.

**33.** Fluggerät gemäss einem der Ansprüche 1 bis 32, in welchem die linke und die rechte Eintrittskante (10) von der Spitze des Fluggeräts bis zur benannten grössten Spannweite jeweils eine vorzugsweise im wesentlichen fliessende, stetige Linie mit zwei Wendepunkten bildet.

**34.** Fluggerät gemäss einem der Ansprüche 1 bis 33, in welchem die transversale Querschnittfläche von der Spitze des Fluggeräts bis zur benannten grössten Spannweite vorzugsweise im wesentlichen fliessend und stetig verläuft.

**35.** Fluggerät gemäss einem der Ansprüche 1 bis 34, in welchem die transversale Umrisslänge von der Spitze des Fluggeräts bis zur benannten grössten Spannweite vorzugsweise im wesentlichen fliessend und stetig verläuft.

**36.** Fluggerät gemäss einem der Ansprüche 1 bis 35, in welchem das linke und das rechte Aussenprofil von der Spitze des Fluggeräts bis zur grössten Spannweite jeweils eine vorzugsweise im wesentlichen fliessende, stetige Linie mit zwei Wendepunkten bilden.

**37.** Fluggerät gemäss einem der Ansprüche 1 bis 36, in welchem die transversale Querschnittfläche und/oder die transversale Umrisslänge von der Spitze des Fluggeräts bis zur benannten grössten Spannweite vorzugsweise im wesentlichen fliessend und stetig verlaufen.

**38.** Fluggerät gemäss einem der Ansprüche 1 bis 37, **dadurch gekennzeichnet, dass** das Profil des Flügels einen kleineren Anstellwinkel hat als das Profil des Rumpfes.

**39.** Fluggerät gemäss einem der Ansprüche 1 bis 38, **dadurch gekennzeichnet, dass** das negativ gewölbte Profil im Flug einen grösseren Anstellwinkel aufweist als das oder die positiv gewölbten Profile.

**40.** Fluggerät mit:

einem Auftrieb erzeugenden Rumpf (1), dessen Grundriss sich im ersten Fünftel (13) und im letzten Fünftel (18) progressiv verjüngt, zwei Flügel (2), wobei die Fläche der Projektion beider Flügel in einer horizontalen Ebene weniger als vierzig Prozent der gesamten Auftriebsfläche darstellt, einem Höhenleitwerk (4) am letzten Fünftel (18) des Rumpfes,

wobei das Profil des Rumpfes einen positiven Momentenbeiwert aufweist während das Profil der Flügel einen negativen Momentenbeiwert aufweist.

## Claims

1. Flight device with:

    a lift-generating fuselage (1), whose outline tapers progressively in the first fifth (13) and in the last fifth (18),
    two wings (2), the projection area of both wings on a horizontal plane representing less than forty percent of the total lift surface,
    a horizontal stabilizer (4) on the rear fifth (18) of the fuselage,
    the longitudinal middle profile of the flight device having no or a negative cambering,
    and the longitudinal profile of the wings being positively cambered.

2. The flight device of claim 1, wherein the longitudinal middle profile of the flight device has an at least partially negative cambering.

3. The flight device of claim 2, wherein the largest span (11) of said lift-generating fuselage (1) lies in the third (15) or fourth (17) fifth of the total length, and wherein the maximum span of the wings lies in the fourth fifth (17) of the total length of said fuselage.

4. Flight device according to claim 3, whose largest span (11) is located between 40% and 80% of the total length of said fuselage.

5. Flight device according to claim 4, whose largest span (11) lies between 66% and 80% of the total length of said fuselage.

6. Flight device according to one of the claims 1 to 4, wherein the fuselage's profile has a positive moment correction value whilst the wings' profile has a negative moment correction value.

7. Flight device according to one of the claims 1 to 6, wherein the projection area of both wings (2) on a horizontal plane represents less than thirty percent of the total lift surface.

8. Flight device according to one of the claims 1 to 7, wherein the projection area of both wings (2) on a horizontal plane represents less than twenty percent of the total lift surface.

9. Flight device according to one of the claims 1 to 8, wherein the projection area of both wings (2) on a vertical plane represents less than 60 percent of the projection area of both wings on a horizontal plane.

10. Flight device according to one of the claims 1 to 9, wherein the span of said horizontal stabilizer (4) has at least 90% of the maximum span of the fuselage (1).

11. Flight device according to one of the claims 1 to 10, wherein the ratio between the lift surface of said third (15) and forth (17) fifth of the flight device including the wings (2) and the lift surface of the first (13) and second (14) fifth of the flight device is between 1.5 and 3.0,
and wherein the ratio between the lift surface of said third (15) and forth (17) fifth of the flight device including the wings (2) and the lift surface of the last fifth (18) of the fuselage is between 5.0 and 15.

12. Flight device according to one of the claims 1 to 11, with a cockpit (3) that is located in a thickening (16) of the fuselage's upper side, said thickening (16) being as long as said fuselage (1).

13. Flight device according to claim 12, wherein said cockpit (3) is partially integrated in said fuselage (1).

14. Flight device according to one of the claims 1 to 13, wherein the entire configuration has fluid transitions, so that it is not exactly discernible where said fuselage (1) stops and where said wings (2) start.

15. Flight device according to one of the claims 1 to 14, wherein the outlet edge (20) of said wings (2) on the wing tip (22) has an angle between 60° and 120° to the flight device's longitudinal axis (12).

16. Flight device according to claim 15, wherein the outlet edge (20) of said wings (2) on the wing tip (22) has an angle between 70° and 110° to the flight device's longitudinal axis (12).

17. Flight device according to claim 16, wherein the outlet edge (20) of said wings (2) on the wing tip (22) has an angle between 80° and 100° to the flight device's longitudinal axis (12).

18. Flight device according to claim 17, wherein the outlet edges (20) of said wings (2) on the wing tip (22) have an angle of 90° to the flight device's longitudinal axis (12).

19. Flight device according to one of the claims 1 to 18, wherein the front edge (21) of said wings (2) has a shape that, from front to back, is first concave and then convex, and wherein the angle of the tangent of said curves, at the inflexion point (23) between the concave segment and the convex segment, has an angle between 10° and 55° relative to the flight device's longitudinal axis (12).

20. Flight device according to one of the claims 1 to 19, wherein the wings (2) have a smaller angle of incidence than the lift-generating fuselage.

21. Flight device according to one of the claims 1 to 20, wherein the steering around the longitudinal axis occurs only through swinging in opposite direction of said horizontal stabilizer (4).

22. Flight device according to one of the claims 1 to 21, wherein the left and the right front edges (10) from the tip of the flight device up to said widest span from front to back has first a convex, then a concave and then again a convex shape.

23. Flight device according to one of the claims 1 to 22, having an aspect ratio of $\lambda < 3$ ($\lambda = l^2/S$, with $l$ representing the wings' span and $S$ the lift surface).

24. Flight device according to one of the claims 1 to 22, wherein the ratio between the length (12) and the maximal span of the flight device including wings is between 0.5 and 1.5.

25. Flight device according to one of the claims 1 to 24, wherein the ratio between the length (12) and the maximal span of the flight device including wings is between 0.75 and 1.5.

26. Flight device according to one of the claims 1 to 25, with at least one powering unit (6) that is at least partially integrated in the fuselage (1).

27. Flight device according to claim 26, with at least one powering unit engine intake (60) on the underside of the flight device.

28. Flight device according to one of the claims 26 or 27, with at least one additional powering unit engine intake (61) on the upper side of the flight device.

29. Flight device according to claim 27, wherein said additional powering unit engine intake (61) can be opened independently of the powering unit engine intake (60) on the underside of the flight device during take-off and/or climbing flight.

30. Flight device according to one of the claims 28 to 29, wherein said additional powering unit engine intake (61) builds a nearly even outer surface on the upper side of the fuselage.

31. Flight device according to claim 26, with at least one powering unit engine intake (60) on the upper side of the flight device.

32. Flight device according to one of the claims 1 to 31, having an analogy to the shape of a fish.

33. Flight device according to one of the claims 1 to 32, wherein the left and the right front edges (10) from the tip of the flight device up to said widest span build each preferably a more or less fluid, continuous line with two inflexion points.

34. Flight device according to one of the claims 1 to 33, wherein the transversal cross section surface from the tip of the flight device to said widest span is preferably more or less fluid and continuous.

35. Flight device according to one of the claims 1 to 34, wherein the transversal outline from the tip of the flight device to said widest span is preferably more or less fluid and continuous.

36. Flight device according to one of the claims 1 to 35, wherein the left and the right outer profile from the tip of the flight device up to the widest span build each preferably a more or less fluid, continuous line with two inflexion points.

37. Flight device according to one of the claims 1 to 36, wherein the transversal cross section surface and/or the transversal outline from the tip of the flight device to said widest span are preferably more or less fluid and continuous.

38. Flight device according to one of the claims 1 to 37, **characterized in that** the profile of the wing has a smaller angle of incidence than the profile of the fuselage.

39. Flight device according to claim one of the claims 1 to 38, **characterized in that** the negatively cambered profile in flight has a wider angle of incidence than the positively cambered profile or profiles.

40. Flight device with:

> a lift-generating fuselage (1), whose outline tapers progressively in the first fifth (13) and in the last fifth (18),
> two wings (2), the projection area of both wings on a horizontal plane representing less than forty percent of the total lift surface,
> a horizontal stabilizer (4) on the rear fifth (18) of the fuselage,
> the fuselage's profile having a positive moment correction value whilst the wings' profile has a negative moment correction value.

**Revendications**

1. Aérodyne avec:

   un fuselage (1) générant une portance, dont le contour s'effile progressivement dans le premier cinquième (13) et dans le dernier cinquième (18),
   deux ailes (2), la surface de la projection des deux ailes dans un plan horizontal représentant moins de quarante pourcent de la surface de portance totale,
   un empennage d'altitude (4) au cinquième postérieur (18) du fuselage (1),
   le profile longitudinal médian de l'aérodyne ne comportant soit aucun renflement soit un renflement négatif,
   et le profile longitudinal des ailes étant cambré positivement.

2. L'aérodyne de la revendication 1, dans lequel le profile longitudinal médian de l'aérodyne possède une cambrure au moins partiellement négative.

3. L'aérodyne de la revendication 2, dans lequel la plus grande envergure (11) du fuselage (1) générant une portance est située dans le troisième (15) ou quatrième (17) cinquième de la longueur totale, et dans lequel la plus grande envergure des ailes se situe dans le quatrième (17) cinquième de la longueur totale dudit fuselage.

4. Aérodyne selon la revendication 3, dont la plus grande envergure (11) se situe entre 40% et 80% de la longueur totale dudit fuselage.

5. Aérodyne selon la revendication 4, dont la plus grande envergure (11) se situe entre 66% et 80% de la longueur totale dudit fuselage.

6. Aérodyne selon l'une des revendications 1 à 4, dans lequel le profile du fuselage possède un coefficient de moment positif tandis que le profile des ailes possède un coefficient de moment négatif.

7. Aérodyne selon l'une des revendications 1 à 6, dans lequel la surface de la projection des deux ailes (2) dans un plan horizontal représente moins de trente pourcent de la surface de portance totale.

8. Aérodyne selon l'une des revendications 1 à 7, dans lequel la surface de la projection des deux ailes (2) dans un plan horizontal représente moins de vingt pourcent de la surface de portance totale.

9. Aérodyne selon l'une des revendications 1 à 8, dans lequel la surface de la projection des deux ailes (2) dans un plan vertical représente moins de 60 pourcent de la surface de la projection des deux ailes dans un plan horizontal.

10. Aérodyne selon l'une des revendications 1 à 9, dans lequel l'envergure dudit empennage d'altitude (4) représente au moins 90% de l'envergure maximale du fuselage (1).

11. Aérodyne selon l'une des revendications 1 à 10, dans lequel le rapport entre la surface de portance dudit troisième (15) et du quatrième (17) cinquième de l'aérodyne y compris les ailes, et la surface de portance du premier (13) et du deuxième (14) cinquième de l'aérodyne se situe entre 1.5 et 3.0, et dans lequel le rapport entre la surface de portance dudit troisième (15) et quatrième (17) cinquième de l'aérodyne, y compris les ailes, et la surface de portance du dernier cinquième (18) du fuselage se situe entre 5.0 et 15.

12. Aérodyne selon l'une des revendications 1 à 11, avec un habitacle (3), qui est placé en partie dans un renflement (16) sur la face supérieure du fuselage, ledit renflement (16) étant aussi long que ledit fuselage (1).

13. Aérodyne selon la revendication 12, dans lequel ledit habitacle (3) est partiellement intégré dans ledit fuselage (1).

14. Aérodyne selon l'une des revendications 1 à 13, dans lequel la configuration totale présente des transitions fluides, de sorte qu'il n'est pas précisément reconnaissable où ledit fuselage (1) finit et où lesdites ailes (2) commencent.

15. Aérodyne selon l'une des revendications 1 à 14, dans lequel le bord de fuite (20) desdites ailes (2) à l'extrémité d'aile (22) forme un angle entre 60° et 120° avec l'axe longitudinal (12) de l'aérodyne.

16. Aérodyne selon la revendication 15, dans lequel le bord de fuite (20) desdites ailes (2) à l'extrémité d'aile (22) forme un angle entre 70° et 110° avec l'axe longitudinal (12) de l'aérodyne.

17. Aérodyne selon la revendication 16, dans lequel le bord de fuite (20) desdites ailes (2) à l'extrémité d'aile (22) forme un angle entre 80° et 100° avec l'axe longitudinal (12) de l'aérodyne.

18. Aérodyne selon la revendication 17, dans lequel le bord de fuite (20) desdites ailes (2) à l'extrémité d'aile (22) forme un angle de 90° avec l'axe longitudinal (12) de l'aérodyne.

19. Aérodyne selon l'une des revendications 1 à 18, dans lequel le bord d'attaque (21) desdites ailes (2) présente une forme, de l'avant vers l'arrière, d'abord concave et ensuite convexe, et dans lequel l'angle de la tangente de ladite courbe au point d'inflexion (23) entre le segment concave et le segment convexe forme un angle entre 10° et 55° avec l'axe longitudinal (12) de l'aérodyne.

20. Aérodyne selon l'une des revendications 1 à 19, dans lequel les ailes (2) présentent un angle d'attaque plus petit que le fuselage générant une portance.

21. Aérodyne selon l'une des revendications 1 à 20, dans lequel le pilotage autour de l'axe longitudinal a lieu uniquement par braquage en sens opposé dudit empennage d'altitude (4).

22. Aérodyne selon l'une des revendications 1 à 21, dans lequel les bords d'attaque (10) gauche et droit de la pointe de l'aérodyne jusqu'à ladite plus grande envergure présente une forme, de l'avant vers l'arrière, d'abord convexe, puis concave et ensuite à nouveau convexe.

23. Aérodyne selon l'une des revendications 1 à 22, qui présente une élongation de $\lambda < 3$ ($\lambda = l^2/S$, où I représente l'envergure des ailes et S la surface des ailes).

24. Aérodyne selon l'une des revendications 1 à 22, dans lequel le rapport entre la longueur (12) et l'envergure maximale de l'aérodyne y compris les ailes se situe entre 0.5 et 1.5.

25. Aérodyne selon l'une des revendications 1 à 24, dans lequel le rapport entre la longueur (12) et l'envergure maximale de l'aérodyne y compris les ailes se situe entre 0.75 et 1.5.

26. Aérodyne selon l'une des revendications 1 à 25, avec au moins un réacteur (6) qui est au moins partiellement intégré dans le fuselage (1).

27. Aérodyne selon la revendication 26, avec au moins une entrée de réacteur (60) sur la face inférieure de l'aérodyne.

28. Aérodyne selon l'une des revendications 26 ou 27, avec au moins une entrée de réacteur supplémentaire (61) sur la face supérieure de l'aérodyne.

29. Aérodyne selon la revendication 27, dans lequel ladite entrée de réacteur supplémentaire (61) peut être ouverte indépendamment de l'entrée de réacteur (60) sur la face supérieure de l'aérodyne lors du décollage et/ou du vol ascendant.

30. Aérodyne selon l'une des revendications 28 à 29, dans lequel ladite entrée de réacteur supplémentaire (61) forme une surface externe approximativement lisse sur la face supérieure du fuselage.

31. Aérodyne selon la revendication 26, avec au moins une entrée de réacteur (60) sur la face supérieure du fuselage.

32. Aérodyne selon l'une des revendications 1 à 31, qui présente une analogie à la forme d'un poisson.

33. Aérodyne selon l'une des revendications 1 à 32, dans lequel les bords d'attaque (10) gauche et droit de la pointe de l'aérodyne jusqu'à ladite plus grande envergure forment chacun une ligne de préférence essentiellement fluide et continue avec deux points d'inflexion.

34. Aérodyne selon l'une des revendications 1 à 33, dans lequel l'aire de la section transversale de la pointe de l'aérodyne jusqu'à ladite plus grande envergure se développe de préférence essentiellement de manière continue et fluide.

35. Aérodyne selon l'une des revendications 1 à 34, dans lequel la silhouette longitudinale transversale de la pointe de l'aérodyne jusqu'à ladite plus grande envergure se développe de préférence essentiellement de manière continue et fluide.

36. Aérodyne selon l'une des revendications 1 à 35, dans lequel le profile extérieur gauche et droit de la pointe de l'aérodyne jusqu'à ladite plus grande envergure forme une ligne de préférence essentiellement fluide et continue avec deux points d'inflexion.

37. Aérodyne selon l'une des revendications 1 à 36, dans lequel l'aire de la section transversale et/ou la silhouette longitudinale transversale de la pointe de l'aérodyne jusqu'à ladite plus grande envergure se développe de préférence essentiellement de manière continue et fluide.

38. Aérodyne selon l'une des revendications 1 à 37, **caractérisé en ce que** le profile de l'aile présente un angle d'attaque plus petit que le profile du fuselage.

39. Aérodyne selon l'une des revendications 1 à 38, **caractérisé en ce que** le profile cambré négativement lors du vol présente un angle d'attaque plus grand que le ou les profiles cambrés positivement.

40. Aérodyne avec:

un fuselage (1) générant une portance, dont le contour s'effile progressivement dans le premier cinquième (13) et dans le dernier cinquième (18),
deux ailes (2), la surface de la projection des deux ailes dans un plan horizontal représentant moins de quarante pourcent de la surface de portance totale,
un empennage d'altitude (4) au cinquième postérieur (18) du fuselage (1),

où le profile du fuselage possède un coefficient de moment positif tandis que le profile des ailes possède un coefficient de moment négatif.

Fig. 1

Fig. 1bis

Fig. 2

Fig. 2bis

Fig. 3

Fig. 3bis

Fig. 4

Fig. 4bis

Fig. 5

Fig. 5bis

Fig. 6

EP 1 620 310 B1

Fig. 7

Frontansicht

Fig. 8

θ

Fig. 9